# FASCICULE DE BREVET EUROPEEN

(11) **EP 3 014 794 B1**
(45) Date de publication et mention de la délivrance du brevet: **02.08.2017**
(21) Numéro de dépôt: 14749868.7
(22) Date de dépôt: 10.06.2014
(51) Int. Cl.: H04B 13/00, H04B 5/00, H02J 50/10

(54) **DISPOSITIF PORTABLE COMPRENANT UNE ÉLECTRODE DE TRANSMISSION DE DONNÉES PAR COURANT INTRACORPOREL**
TRAGBARE VORRICHTUNG MIT EINER ELEKTRODE ZUR DATENÜBERTRAGUNG DURCH EINEN INTRAKORPORALEN FLUSS
PORTABLE DEVICE COMPRISING AN ELECTRODE FOR TRANSMITTING DATA BY INTRACORPOREAL CURRENT

(30) Priorité: 24.06.2013 FR 1356005; 24.06.2013 FR 1356008
(43) Date de publication de la demande: 04.05.2016
(73) Titulaire: Inside Secure, 13590 Meyreuil (FR)
(72) Inventeur: PERNISEK, Florian, F-13100 Aix En Provence (FR); CHARRAT, Bruno, F-13090 Aix en Provence (FR)
(74) Mandataire: Marchand, André
(86) Numéro de dépôt international: PCT/FR2014/051382
(87) Numéro de publication internationale: WO 2014/207338

(56) Documents cités:
- WO-A1-2009/081337
- JP-A- 2009 232 284
- US-A1- 2010 029 203
- US-A1- 2010 048 127

## Description

La présente invention concerne un dispositif électronique comprenant des moyens de transmission de données par courant intracorporel comprenant au moins une électrode destinée à être couplée capacitivement avec le corps d'un sujet ou avec l'environnement.

La présente invention concerne plus particulièrement les techniques de transmission de données dites "IBAN" ("Intra Body Area Network)" ou "PAN" ("Personal Area Network") du type décrit dans le document US 2010/0048127 A1, le brevet européen EP 0 824 799 et dans le document "Personal Area Networks (PAN) - Near-Field Intra-Body Communication", de Thomas Guthrie Zimmerman, Massachusetts Institute of Technology, septembre 1995.

La figure 1 illustre schématiquement un système de transmission de données IBAN comprenant un émetteur D1, un récepteur D2, et le corps HB d'un sujet. L'émetteur D1 comprend une électrode externe OE1, ou électrode d'environnement, une électrode interne IE1, ou électrode de corps, et un générateur de tension SG relié aux deux électrodes. Le récepteur D2 comprend également une électrode externe OE2 et une électrode interne IE2.

Le générateur SG de l'émetteur D1 crée un potentiel oscillant Vi1 entre les électrodes OE1, IE1. Un champ électrique E se forme entre l'électrode interne IE1 et le corps HB du sujet, et entre l'électrode externe OE1 et l'environnement. Le corps HB est considéré comme une grande plaque de condensateur pouvant être chargée et déchargée par l'émetteur D1. L'environnement est schématisé par le sol, et présente un potentiel de référence considéré comme formant la masse GND du système IBAN. La charge électrique appliquée au corps du sujet lui confère un potentiel différent de celui de l'environnement, ce qui entraîne l'apparition d'un champ électrique E entre le corps et l'environnement et entre le corps et le récepteur D2. Une tension Vi2 apparaît sur l'électrode IE2 du récepteur D2. Un circuit de réception RCT mesure la tension Vi2, relativement au potentiel de l'électrode externe OE2.

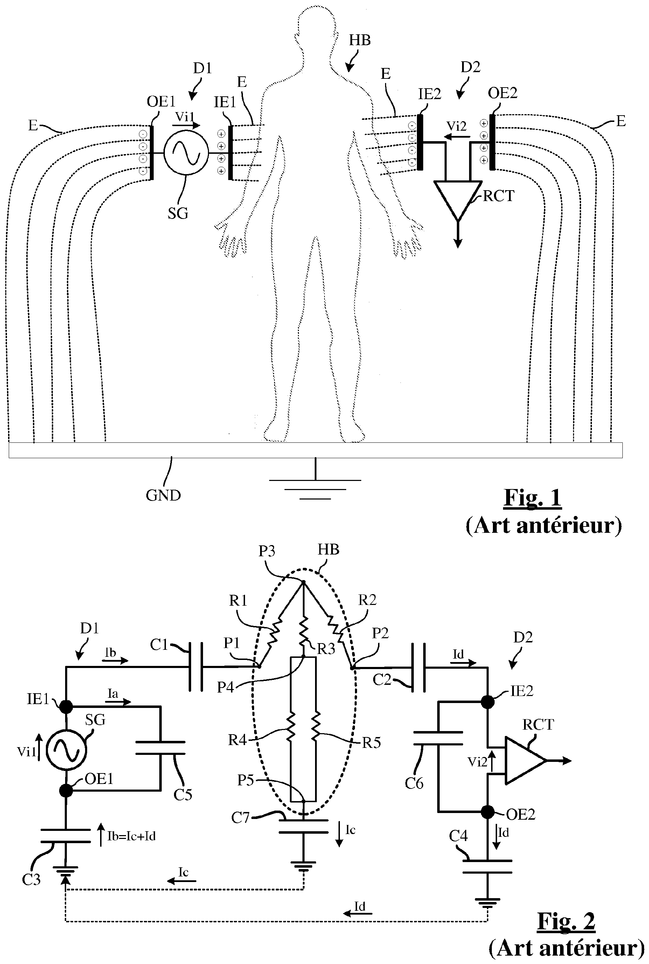

La figure 2 est une représentation du système IBAN de la figure 1 sous la forme d'un réseau électrique capacitif et résistif. Une capacité C1 représente le couplage capacitif entre l'électrode interne IE1 du dispositif D1 et une zone du corps la plus proche de cette électrode, schématisée par un point P1. Une capacité C2 représente le couplage capacitif entre l'électrode interne IE2 du dispositif D2 et une zone du corps la plus proche de cette électrode, schématisée par un point P2. Une capacité C3 représente le couplage capacitif entre l'électrode externe OE1 du dispositif D1 et l'environnement. Une capacité C4 représente le couplage capacitif entre l'électrode externe OE2 du dispositif D2 et l'environnement. Une capacité C5 représente le couplage capacitif entre les électrodes OE1 et IE1. Une capacité C6 représente le couplage capacitif entre les électrodes OE2 et IE2, et une capacité C7 représente le couplage capacitif entre les pieds et l'environnement. D'autres capacités de couplage figurant dans le modèle du Massachusetts Institute of Technology ne sont pas représentées ici dans un souci de simplicité.

Le corps HB est considéré ici comme un noeud purement résistif schématisé par des résistances R1, R2, R3, R4, R5. Les résistances R1 et R2 sont en série et passent par un point milieu fictif P3. Elles illustrent la résistance électrique totale du corps entre les points P1 et P2. En supposant par exemple que l'utilisateur couple capacitivement les dispositifs D1 et D2 au moyen de ses mains droite et gauche, la résistance R1 est la résistance du bras droit et de l'épaule droite, et la résistance R2 est la résistance de l'épaule gauche et du bras gauche, le point milieu P3 se situant entre les deux épaules. La résistance R3 relie le point P3 à un point fictif P4 au voisinage du bassin et représente la résistance du thorax. Les résistances R4 et R5 sont en parallèle et relient le point P4 à un point fictif P5 couplé à l'environnement par la capacité C7, et représentent les résistances séries des jambes gauche et droite.

Lorsque la tension Vi1 est appliquée aux électrodes IE1, OE1, un courant est émis par le générateur de tension SG. Une fraction Ia de ce courant traverse la capacité C5 pour atteindre l'électrode externe OE1, et une fraction Ib de ce courant passe dans le corps à travers la capacité C1, pour former un courant intracorporel. Une fraction Ic du courant Ib traverse la résistance R1, la résistance R3 du thorax et les résistances R4, R5 des jambes, puis la capacité C7, pour rejoindre l'électrode externe OE1 du dispositif D1 en passant par l'environnement et la capacité C3, l'environnement étant représenté par des traits pointillés. Une fraction Id du courant Ib traverse les résistances R1, R2 et la capacité C1 pour atteindre l'électrode interne IE2 du dispositif D2, puis traverse le dispositif D2 et rejoint l'électrode externe OE1 du dispositif D1 en passant par l'environnement et la capacité C3, comme également représenté par des traits pointillés. Les résistances R3+R4 ou R3+R5 peuvent être très supérieures à la résistance R2, et le courant le très inférieur au courant Id. Le courant intracorporel Id génère la tension Vi2 aux bornes des électrodes IE2, OE2. Celle-ci est mesurée par le circuit de réception RCT, qui peut aussi être configuré pour mesurer le courant Id.

Pour transférer des données du dispositif D1 au dispositif D2, l'amplitude de la tension Vi1 est modulée par un signal porteur de données. La modulation d'amplitude se retrouve dans le courant Id et dans la tension Vi2. Le dispositif D2 démodule le courant Id ou la tension Vi2 et en extrait les données qu'il contient.

Le courant Id est de très faible valeur, ainsi que la tension Vi2, qui est généralement de l'ordre du millivolt à quelques millivolts. Grâce aux progrès réalisés dans le domaine de la microélectronique, on réalise aujourd'hui des circuits intégrés sur puce de semi-conducteur capables de détecter un signal alternatif de très faible valeur et d'en extraire un signal de modulation porteur de données, permettant de mettre en oeuvre des applications IBAN au moyen desquelles des dispositifs proches du corps peuvent échanger des données.

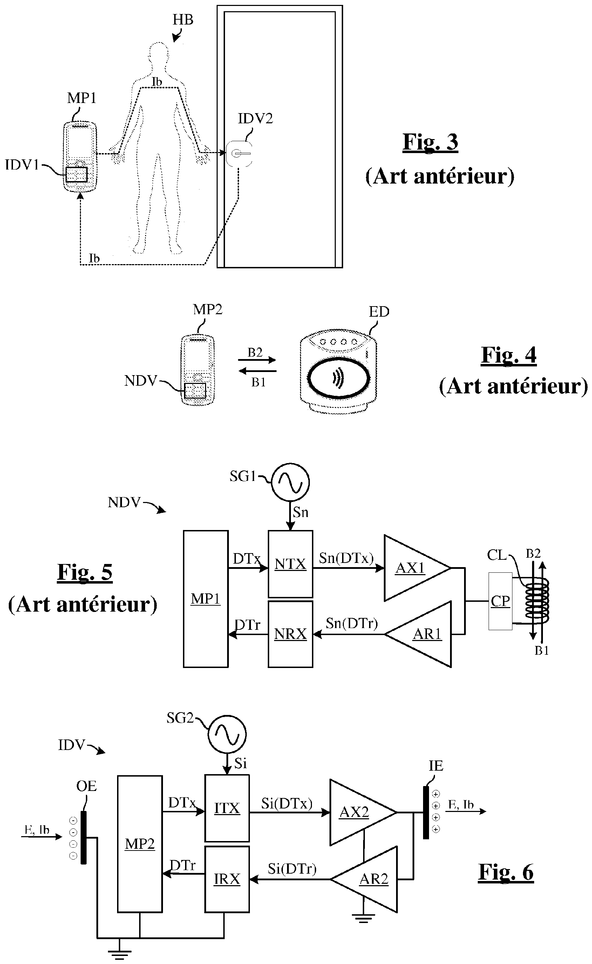

Dans le cadre de la présente invention, on envisage d'intégrer la technologie IBAN dans des dispositifs électroniques portables d'usage courant et notamment des téléphones mobiles. La figure 3 illustre un exemple d'application visée. Un premier dispositif IDV1 de transmission de données IBAN est intégré dans un téléphone mobile MP1 et un second dispositif IDV2 de transmission de données IBAN est intégré dans une serrure électronique de porte, la poignée de la porte comprenant ou formant l'électrode interne du dispositif IDV2. Lorsque l'utilisateur porteur du téléphone MP1 touche la poignée ou rapproche sa main de la poignée, les dispositifs IDV1, IDV2 échangent des données par l'intermédiaire du courant intracorporel Ib qui traverse le corps HB du sujet. Le téléphone fournit par exemple au dispositif IDV2 un code d'authentification nécessaire au déverrouillage de la porte.

Il pourrait donc être souhaité de prévoir un moyen permettant d'intégrer un dispositif de transmission de données IBAN dans un objet portable électronique.

Toujours dans le cadre de la présente invention, on envisage également d'intégrer un dispositif de transmission de données IBAN dans un objet portable électronique comprenant un dispositif de transmission de données par couplage inductif, ou dispositif NFC ("Near Field Communication").

La figure 4 représente schématiquement un téléphone mobile MP2 comprenant un dispositif NDV de transmission de données NFC. Le dispositif NDV comprend une bobine d'antenne intégrée dans le téléphone (non représentée) et est configuré pour échanger des données par couplage inductif avec un dispositif externe ED, par exemple un lecteur NFC. Au cours de la communication, le dispositif externe ED émet un champ magnétique B1 qui est reçu par la bobine d'antenne du dispositif NVD. Le dispositif NVD peut lui-même émettre un champ magnétique B2 pour adresser des données au dispositif externe ED.

Il pourrait donc également être souhaité de prévoir un moyen permettant d'intégrer un dispositif de transmission de données IBAN dans un objet portable électronique comprenant un dispositif de transmission de données par couplage inductif.

Le document US 2010/0048127, paragraphes 49 et 53, suggère qu'une électrode IBAN soit au moins partiellement transparente ou soit au moins agencée dans une zone transparente d'un afficheur d'un dispositif portatif tel un téléphone mobile, l'autre électrode étant agencée sur une face arrière du dispositif.

Des modes de réalisation de l'invention concernent un dispositif électronique portable comprenant un afficheur numérique comprenant un afficheur numérique comportant un plan électriquement conducteur pour neutraliser des rayonnements électromagnétiques parasites de l'afficheur, un dispositif de transmission de données par courant intracorporel comprenant une première électrode destinée à être couplée capacitivement avec le corps d'un sujet et une seconde électrode destinée à être couplée capacitivement avec l'environnement, et un circuit imprimé comprenant un plan conducteur, dans lequel la première ou seconde électrode du dispositif de transmission de données est formée par le plan conducteur de l'afficheur, qui est relié électriquement au dispositif de transmission de données, et la seconde ou première électrode est formée par le plan conducteur du circuit imprimé.

Selon un mode de réalisation, une borne de masse du dispositif de transmission de données par courant intracorporel est reliée au plan conducteur de l'afficheur.

Selon un mode de réalisation, le dispositif comprend un circuit imprimé, et l'autre électrode est formée par un plan conducteur du circuit imprimé.

Selon un mode de réalisation, le plan conducteur du circuit imprimé est à un potentiel électrique flottant.

Selon un mode de réalisation, le dispositif comprend une bobine électrique qui est agencée à proximité du plan conducteur du circuit imprimé de manière à générer, à partir d'un signal alternatif, un champ magnétique alternatif ayant des lignes de champ qui se heurtent au plan conducteur du circuit imprimé et induisent dans celui-ci des courants qui induisent à leur tour un champ électrique générateur de courant intracorporel.

Selon un mode de réalisation, la bobine comporte des enroulements coaxiaux autour d'un coeur magnétiquement conducteur, et présente un axe magnétique parallèle au plan conducteur.

Selon un mode de réalisation, la bobine est montée sur une face du circuit imprimé et le plan conducteur du circuit imprimé s'étend sur la face du circuit imprimé recevant la bobine.

Selon un mode de réalisation, le dispositif comprend en outre un dispositif de transmission de données par couplage inductif, et dans lequel la bobine électrique est la bobine d'antenne du dispositif de transmission de données par couplage inductif.

Selon un mode de réalisation, le dispositif comprend un processeur contrôlant le dispositif de transmission de données par couplage inductif et le dispositif de transmission de données par courant intracorporel, et présentant un premier mode de fonctionnement pour la transmission de données par courant intracorporel et un second mode de fonctionnement pour la transmission de données par couplage inductif.

Selon un mode de réalisation, le dispositif de transmission de données par couplage inductif et le dispositif de transmission de données par courant intracorporel comprennent un générateur de signal alternatif commun fournissant un premier signal alternatif pour la transmission de données par courant intracorporel et un second signal alternatif pour la transmission de données par couplage inductif.

Selon un mode de réalisation, les deux signaux alternatifs sont de même fréquence.

Selon un mode de réalisation, les deux signaux alternatifs oscillent à 13,56 MHz.

Selon un mode de réalisation, le dispositif de transmission de données par couplage inductif et le dispositif de transmission de données par courant intracorporel comprennent un amplificateur commun pour amplifier un signal alternatif fourni par le générateur de signal alternatif commun et l'appliquer à la bobine d'antenne.

Selon un mode de réalisation, le dispositif de transmission de données par couplage inductif comprend un circuit de transmission configuré pour fournir à l'amplificateur commun un signal modulé porteur de données à transmettre), et le dispositif de transmission de données par courant intracorporel comprend un circuit de transmission configuré pour fournir à l'amplificateur commun un signal modulé porteur de données à transmettre).

Selon un mode de réalisation, le dispositif comprend également un dispositif de radiotéléphonie.

Ces caractéristiques, ainsi que d'autres, seront exposées plus en détail dans la description suivante de modes de réalisation de dispositifs selon l'invention, faite à titre non limitatif en relation avec les figures jointes parmi lesquelles :
- la figure 1 précédemment décrite illustre schématiquement un système IBAN,
- la figure 2 précédemment décrite est un schéma électrique équivalent du système IBAN de la figure 1,
- la figure 3 précédemment décrite montre un exemple d'application IBAN,
- la figure 4 précédemment décrite montre un exemple d'application NFC,
- la figure 5 montre un exemple d'architecture d'un dispositif de transmission de données NFC,
- la figure 6 montre un exemple d'architecture d'un dispositif de transmission de données IBAN,
- la figure 7 montre une architecture d'un dispositif de transmission de données IBAN-NFC selon l'invention,
- la figure 8 est une vue en coupe partielle du dispositif de la figure 7,
- la figure 9 est une vue de dessus partielle du dispositif de la figure 7,
- les figures 10A, 10B, 10C représentent respectivement le schéma électrique, une vue en coupe et une vue de dessus d'un premier mode de réalisation du dispositif de la figure 7,
- la figure 10D montre une variante du mode de réalisation de la figure 10C,
- les figures 11A, 11B représentent respectivement le schéma électrique et une vue en coupe d'un second mode de réalisation du dispositif de la figure 7,
- les figures 12A, 12B, 12C représentent respectivement le schéma électrique, une vue en coupe et une vue de dessus d'un troisième mode de réalisation du dispositif de la figure 7,
- les figures 13A et 13B représentent respectivement le schéma électrique et une vue en coupe d'un quatrième mode de réalisation du dispositif de la figure 7,
- les figures 14A et 14B représentent respectivement le schéma électrique et une vue en coupe d'un cinquième mode de réalisation du dispositif de la figure 7,
- les figures 15A et 15B représentent respectivement le schéma électrique et une vue en coupe d'un sixième mode de réalisation du dispositif de la figure 7,
- les figures 16A et 16B représentent respectivement le schéma électrique et une vue en coupe d'un septième mode de réalisation du dispositif de la figure 7,
- les figures 17A et 17B représentent respectivement le schéma électrique et une vue en coupe d'un huitième mode de réalisation du dispositif de la figure 7, et
- la figure 18 montre un exemple de réalisation d'un dispositif portable selon l'invention.

La figure 5 représente l'architecture générale d'un dispositif de transmission de données NFC classique, par exemple du type décrit dans les demandes antérieures EP2431925, EP2431926, EP2431927 et WO 2012/038664. Le dispositif NDV comprend un processeur MP1, un circuit de transmission NTX, un circuit de réception NRX, un générateur SG1 de signal alternatif Sn, un amplificateur de transmission AX1, un amplificateur de réception AR1, et un circuit d'antenne. Le circuit d'antenne comprend une bobine d'antenne CL et des composants d'antenne CP permettant d'accorder le circuit d'antenne sur une fréquence de travail déterminée.

En mode émission de données, le processeur fournit des données DTx au circuit de transmission NTX. Celui-ci fournit à l'amplificateur AX1 un signal porteur de données Sn(DTx) qui combine le signal alternatif Sn et des données DTx, lesquelles peuvent avoir été préalablement codées par le circuit de transmission NTX. L'amplificateur AX1 applique le signal Sn(DTx) au circuit d'antenne, qui génère ainsi un champ magnétique oscillant B2 porteur des données DTx.

En mode réception de données, un champ magnétique externe B1 porteur de donnée DTr génère dans le circuit d'antenne un signal d'antenne Sn(DTr) qui est extrait par l'amplificateur AR1 qui le fournit au circuit de réception NRX. Celui-ci démodule le signal Sn(DTr), en extrait les données DTr et les fournit au processeur.

La figure 6 représente l'architecture générale d'un dispositif IDV de transmission de données IBAN, du type décrit dans la demande française N° 1 353 384 au nom de la demanderesse. Le dispositif IDV comprend un processeur MP2, un circuit de transmission ITX, un circuit de réception IRX, un générateur SG2 de signal alternatif Si, un amplificateur de transmission AX2, un amplificateur de réception AR2, une électrode externe OE (électrode destinée à être couplée à l'environnement) qui est reliée à la masse du dispositif, et une électrode interne IE (électrode destinée à être couplée au corps d'un sujet).

En mode émission de données, le processeur fournit des données DTx au circuit de transmission ITX. Celui-ci fournit à l'amplificateur AX2 un signal porteur de données Si(DTx) qui combine le signal alternatif Si et des données DTx, lesquelles peuvent avoir été préalablement codées par le circuit ITX. L'amplificateur AX2 applique le signal Si(DTx) à l'électrode IE, pour générer un champ électrique oscillant E produisant l'apparition du courant intracorporel Ib décrit plus haut en relation avec la figure 2, lorsque l'électrode IE est couplée au corps du sujet.

En mode réception de données, un champ électrique externe porteur de donnée DTr génère entre les électrodes IE, OE un signal alternatif Si(DTr) qui est détecté et est amplifié par l'amplificateur de réception AR2 avant d'être fourni au circuit de réception IRX. Celui-ci démodule le signal Si(DTr) pour extraire les données DTr, qu'il fournit ensuite au processeur.

Des modes de réalisation de l'invention visent un dispositif de transmission de données IBAN-NFC, c'est-à-dire présentant deux modes de fonctionnement, et capable, dans un premier mode de fonctionnement, de transmettre des données en mode NFC (i.e. par couplage inductif) et, dans un second mode de fonctionnement, de transmettre des données en mode IBAN (i.e. via un courant intracorporel). Plus particulièrement, on cherche à mettre en commun des éléments des dispositifs NDV et IDV précédemment décrits, afin de réduire la complexité, l'encombrement et le prix de revient d'un tel dispositif, par rapport à une simple juxtaposition d'un dispositif IBAN et d'un dispositif NFC. Une telle mise en commun peut concerner différents organes des dispositifs IDV, NDV :
- les processeurs MP1, MP2
- les circuits d'émission NTX et ITX,
- les circuits de réception NRX et IRX,
- les générateurs SG1, SG2
- les moyens d'interface pour l'émission de données, respectivement des électrodes pour une transmission de données IBAN et la bobine d'antenne pour une transmission de données NFC, et leur amplificateurs associés.

Une mise en commun des processeurs MP1, MP2 sous la forme d'un processeur unique ne pose en soi pas de problème technique particulier. Concernant les circuits de transmission NTX et ITX, il sera noté que ceux-ci mettent en oeuvre des techniques de modulation et de codage de données généralement très différentes. Il en est de même pour les circuits de réception NRX et IRX. On considérera donc dans ce qui suit que ces circuits sont conservés dans leur individualité, sans exclure des modes de réalisation consistant dans l'utilisation de circuits de transmission ou de réception à deux modes de fonctionnement résultant de la fusion des circuits NTX, ITX d'une part et des circuits NRX, IRX d'autre part.

Concernant les générateurs SG1, SG2, les techniques de transmission de données IBAN peuvent utiliser des fréquences porteuses couvrant une large plage de valeurs, allant des fréquences RF aux fréquences UHF. D'autre part, les techniques de transmission de données NFC avec une bobine d'antenne utilisent généralement des fréquences RF. Plus particulièrement, la fréquence normalisée de 13,56 MHz est aujourd'hui utilisée dans les applications NFC embarquées dans des objets portables électroniques.

Des essais ont montré que cette fréquence est utilisable pour des transmissions de données IBAN. Il peut donc être prévu, dans certains modes de réalisation d'un dispositif IBAN-NFC selon l'invention, un seul générateur de signal alternatif utilisé à la fois par les circuits de transmission/réception NTX/NRX et les circuits de transmission/réception ITX/IRX. Ce générateur de signal peut fournir un signal de fréquence unique ou ayant une première fréquence lors de transmissions de données IBAN et une seconde fréquence lors de transmissions de données NFC.

Un problème spécifique devant être résolu pour réaliser un dispositif de transmission de données IBAN-NFC concerne les moyens d'interface pour l'émission de données. Ces moyens d'interface sont de natures très différentes et comprennent des électrodes pour une transmission de données IBAN, et une bobine d'antenne pour une transmission de données NFC. Chacun de ces moyens nécessite en principe un amplificateur de transmission dédié, comme précédemment décrit. La prévision d'un seul amplificateur de transmission qui serait d'une part relié à des électrodes pendant une transmission de données IBAN, et d'autre part relié à une bobine d'antenne pendant une transmission de données NFC, impliquerait la prévision d'interrupteurs complexes, devant supporter des tensions élevées, pour relier alternativement la sortie de l'amplificateur de transmission à l'un ou l'autre de ces moyens d'interface.

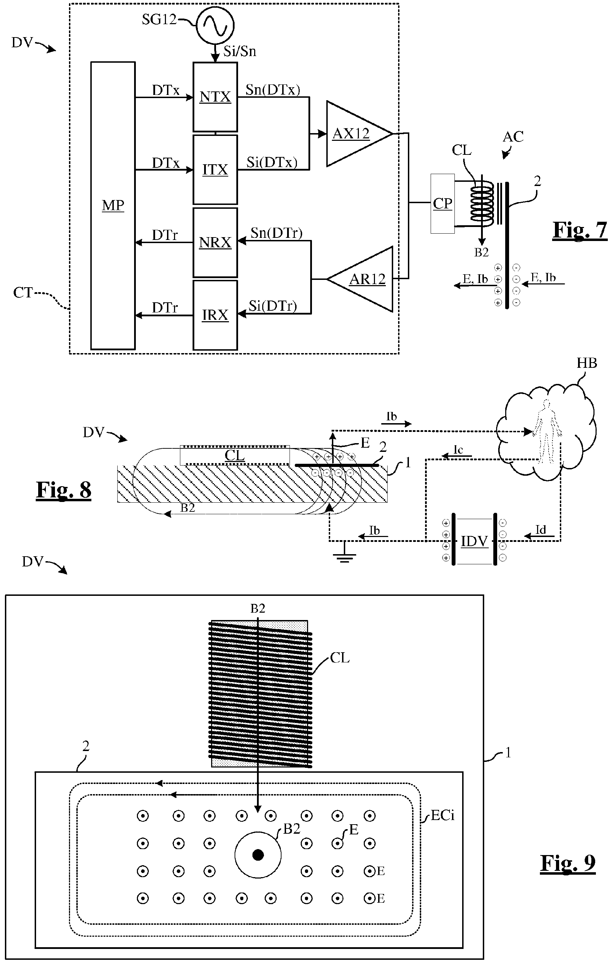

Des modes de réalisation de l'invention visent une simplification de ces moyens d'interface et reposent sur la constatation selon laquelle une électrode IBAN peut être polarisée électriquement par l'intermédiaire d'un champ magnétique produit par une bobine électrique, au lieu de recevoir directement une tension de polarisation. L'architecture générale d'un dispositif de transmission de données IBAN-NFC mettant en oeuvre ce procédé de polarisation d'électrode est représenté sur la figure 7. Le dispositif DV comprend un circuit de contrôle CT, un circuit d'antenne AC et une électrode 2. Le circuit d'antenne AC comprend une bobine d'antenne CL et des composants d'antenne CP. La bobine d'antenne AC est couplée à l'électrode 2, le terme "couplée" signifiant qu'un champ magnétique B2 émis par la bobine d'antenne CL comporte des lignes de champ qui se heurtent à l'électrode 2 et génèrent dans celle-ci des courants induits, généralement appelés courants de Foucault. L'électrode 2 est de préférence très proche de la bobine d'antenne AC de manière que le flux de champ magnétique qui génère les courants induits au sein de celle-ci soit le plus intense possible.

Le circuit de contrôle CT comprend un processeur MP configuré pour gérer deux modes de fonctionnement, respectivement un mode de fonctionnement IBAN et un mode de fonctionnement NFC. Il comprend également un générateur SG12 de signal alternatif Si/Sn commun aux deux modes de fonctionnement, et des circuits de transmission NTX, ITX et de réception NRX, IRX du type décrit plus haut.

Lors d'une transmission de données NFC (soit une transmission de données par couplage inductif), le générateur SG12 fournit au circuit de transmission NTX un signal de porteuse Sn de fréquence F1, par exemple la fréquence normalisée de 13,56 MHz. Lors d'une transmission de données IBAN (soit une transmission de données par courant intracorporel), le générateur SG12 fournit au circuit de transmission ITX un signal de porteuse Si de fréquence F2. Dans un mode de réalisation, les fréquences F1 et F2 sont identiques et par exemple égales à 13,56 MHz.

Le circuit de contrôle CT comprend également un amplificateur de transmission AX12 ayant une entrée relié à une sortie du circuit de transmission NTX et à une sortie du circuit de transmission ITX, et un amplificateur de réception AR12 ayant une sortie reliée à une entrée du circuit de réception NRX et une entrée du circuit de réception IRX. La sortie de l'amplificateur de transmission AX12 et l'entrée de l'amplificateur de réception AR12 sont reliées au circuit d'antenne AC. L'amplificateur AR12 est un amplificateur faible bruit ("Low Noise Amplifier" ou "LNA") présentant un gain variable contrôlé par le processeur MP. Son gain en mode de fonctionnement IBAN est très supérieur à son gain en mode de fonctionnement NFC, par exemple 100 fois plus grand, la tension ou le courant à détecter lors d'une transmission ou d'une réception de données IBAN étant très faibles. Dans une variante de réalisation, deux amplificateurs de réception de gains différents pourraient être prévus côte à côte, l'un pour le mode de fonctionnement IBAN et l'autre pour le mode de fonctionnement NFC.

La liaison entre les sorties des circuits de transmission NTX, ITX et l'amplificateur AX12 peut comprendre un multiplexeur, pour isoler ses sorties l'une de l'autre. On considère ici dans un souci de simplicité que la sortie du circuit de transmission NTX est à haute impédance lorsque le dispositif fonctionne en transmetteur IBAN, et que la sortie du circuit de transmission ITX est à haute impédance lorsque le dispositif fonctionne en transmetteur NFC. De même, un démultiplexeur pourrait être prévu entre la sortie de l'amplificateur AR12 et les entrées des circuits NRX, IRX, mais celles-ci sont supposées ici être à haute impédance en dehors des périodes d'activation de l'un ou l'autre de ces circuits.

Comme montré par une vue en coupe sur la figure 8 et une vue de dessus sur la figure 9, l'électrode 2 est préférentiellement un plan conducteur 2 d'un circuit imprimé 1, par exemple en cuivre. Le plan conducteur peut être agencé à la surface du circuit imprimé, comme représenté, ou être enterré dans le circuit imprimé. Le circuit de contrôle CT est préférentiellement un circuit intégré sur une puce de semi-conducteur qui est agencée sur le circuit imprimé 1. La bobine CL est agencée sur le circuit imprimé et est préférentiellement du type décrit dans la demande EP 2 431 925. Elle comporte ainsi des enroulements coaxiaux montés autour d'un coeur magnétiquement conducteur, par exemple en ferrite, et présente ici un axe magnétique parallèle au plan du circuit imprimé et au plan conducteur 2. Une telle bobine est prévue pour des applications NFC dans lesquelles la modulation de charge pour transmettre des données à un lecteur NFC est faite en émettant des rafales de champ magnétique qui simulent une modulation de charge passive dans les circuits de réception du lecteur.

Les figures 8 et 9 illustrent l'effet technique évoqué plus haut, permettant d'utiliser la bobine d'antenne CL en combinaison avec le plan conducteur 2 pour mettre en oeuvre une transmission de données IBAN. La bobine génère un champ magnétique alternatif B2 ayant des lignes de champ qui se heurtent au plan conducteur 2 et génèrent dans celui-ci des courants induits ECi, comme expliqué plus haut en relation avec la figure 9. Ces courants induits polarisent électriquement le plan conducteur 2 et donnent naissance à un champ électrique E permettant de faire apparaître un courant intracorporel lorsque le plan conducteur 2 formant électrode est couplé au corps HB d'un sujet.

La figure 8 représente également un système d'échange de données IBAN comprenant le plan conducteur 2 soumis au champ magnétique B2 émis par la bobine d'antenne CL, le corps HB d'un utilisateur, et un dispositif IBAN externe IDV. Des signes "+" et "-" symbolisent la polarité du champ électrique sur la face supérieure et la face inférieure du plan conducteur 2, pour une valeur instantanée du signal alternatif Si fourni par le générateur SG12, par exemple une alternance positive de celui-ci. Cette polarité s'inverse chaque demi-alternance du signal Si, ainsi que le sens de circulation du courant. A l'instant représenté sur la figure 8, la face supérieure du plan conducteur 2 est de polarité positive sous l'effet des courants induits, et la face inférieure est de polarité négative. Un courant Ib porteur de données DTx (de sens opposé au sens de circulation des électrons) est émis par une face du plan conducteur 2, traverse le corps HB, où il se divise en un courant Id et en un courant Ic. Le courant Id traverse le dispositif externe IDV qui extrait les données qu'il comporte et retourne au plan conducteur 2 par l'intermédiaire de l'environnement. Le courant Ic retourne au plan conducteur 2 en passant par d'autres parties du corps et l'environnement.

Le courant Id est capté par le dispositif IBAN externe IDV. Ce courant est fonction du signal Sn porteur de données DTx, fourni par le circuit de transmission ITX à la bobine d'antenne CL par l'intermédiaire de l'amplificateur AX12. Une démodulation du courant Id par le dispositif externe IDV permet donc à ce dernier de recevoir les données DTx.

En mode réception de données (données DTr), la bobine d'antenne CL est utilisée par le dispositif DV pour détecter des variations d'un champ électrique porteur de données émis par un dispositif externe IDV. Tout conducteur étant sensible au champ électrique, les variations du champ électrique externe génèrent de faibles variations de tension aux bornes de la bobine, relativement à la masse du dispositif. Ces variations sont amplifiées par l'amplificateur AR12 qui présente un gain très élevé en mode réception IBAN, comme indiqué plus haut. Le signal ainsi capté est démodulé par le circuit de réception IRX qui en extrait les données DTr.

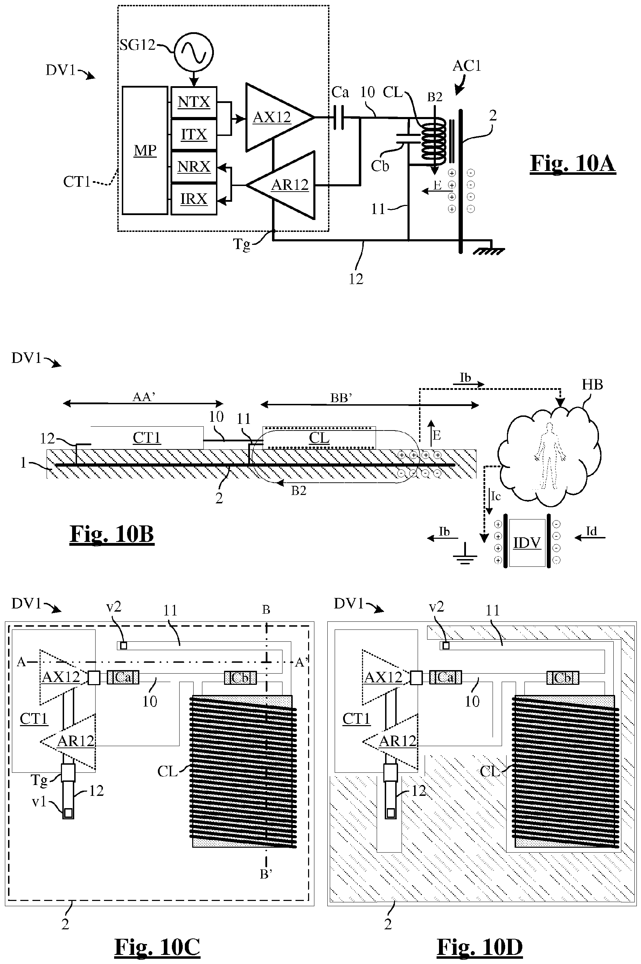

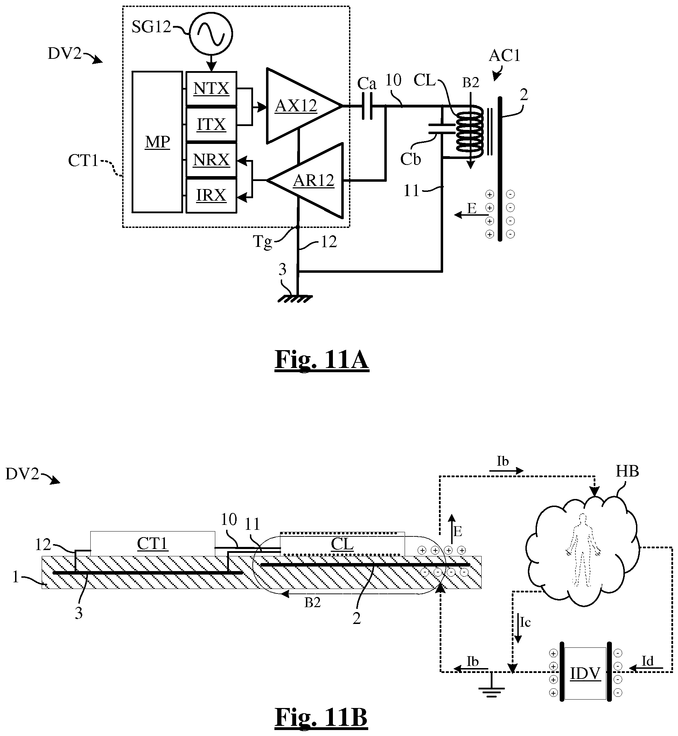

Les figures 10A, 11A représentent deux modes de réalisation DV1, DV2 du dispositif DV de la figure 7. Les dispositifs DV1, DV2 comprennent chacun un circuit d'antenne asymétrique AC1 et un circuit de contrôle CT1 identique au circuit de contrôle CT. Dans le circuit d'antenne asymétrique AC1, une première borne de la bobine d'antenne CL est connectée à une ligne conductrice 10 qui est reliée à la sortie de l'amplificateur AX12 par l'intermédiaire d'un condensateur de découplage Ca, et est connectée à l'entrée de l'amplificateur AR12. Une seconde borne de la bobine d'antenne CL est connectée à une ligne conductrice 11 qui est reliée à un plan de masse du dispositif DV1, DV2. Un condensateur d'accord Cb relie les première et seconde bornes de la bobine d'antenne. Une borne de masse Tg du circuit CT, à laquelle les masses des amplificateurs AX12, AR12 sont connectées, est également reliée au plan de masse via une ligne conductrice 12.

Le circuit d'antenne AC1 présente ainsi une fréquence d'accord qui est fonction de l'inductance de la bobine CL et des capacités des condensateurs Ca et Cb, cette fréquence d'accord devant être égale ou proche de la fréquence des signaux d'excitation Sn ou Si, ou fréquence de travail. Si ces deux signaux ont des fréquences différentes, des condensateurs d'accord sélectionnables au moyen d'interrupteurs pourraient être prévus dans le circuit d'antenne, pour ajuster sa fréquence d'accord à la fréquence de travail désirée.

Dans le dispositif DV1, le plan conducteur 2 forme le plan de masse du dispositif. Le dispositif DV2 comprend au contraire un plan de masse 3 distinct du plan conducteur 2, et ce dernier est laissé à un potentiel flottant. Dans les deux cas, l'effet technique visé pour permettre une transmission de données IBAN est obtenu, à savoir l'apparition d'un champ électrique E de part et d'autre du plan conducteur 2, sous l'effet du champ magnétique émis par la bobine d'antenne, en vue de l'émission d'un courant intracorporel.

La figure 10B est une vue en coupe et la figure 10C une vue de dessus du dispositif DV1. La vue en coupe de la figure 10B présente deux axes de coupes AA' et BB' montrés sur la figure 10C. Comme précédemment décrit, le circuit CT1 est une puce de semi-conducteur agencée sur un circuit imprimé 1 recevant le plan conducteur 2, formant ici un plan de masse auquel la bobine d'antenne CL est reliée via la ligne conductrice 11, et auquel la borne de masse Tg du circuit CT est reliée via la ligne conductrice 12. Les lignes conductrices 10, 11, 12 sont des pistes du circuit imprimé, les pistes 11 et 12 étant reliées au plan conducteur 2 par l'intermédiaire de traversées conductrices v1, v2.

La figure 11B est une vue en coupe du dispositif DV2. Le circuit imprimé 1 recevant le dispositif DV2 comporte ici un plan conducteur 2 à un potentiel flottant et un plan de masse 3 auquel les lignes conductrices 11 et 12 sont connectées.

La figure 10D est une vue de dessus d'une variante du mode de réalisation de la figure 10C, dans laquelle le plan conducteur 2 s'étend à la surface du circuit imprimé, et entoure la bobine d'antenne CL. Il sera noté que pour former une électrode IBAN, le plan conducteur 2 doit présenter au moins une région qui est traversée par le flux magnétique émis par la bobine d'antenne CL, comme on le voit plus clairement sur la figure 9.

Les figures 10B et 11B montrent également un système d'échange de données IBAN comprenant le plan conducteur 2 (supposé ici soumis au champ magnétique émis par la bobine d'antenne CL), le corps HB d'un utilisateur, et un dispositif IBAN externe IDV. Des signes "+" et "-" symbolisent la polarité du champ électrique sur chaque face du plan conducteur 2, pour une valeur instantanée du signal alternatif Si fourni par le générateur SG12. Comme précédemment décrit, le plan conducteur 2 émet un courant Ib porteur de données qui traverse le corps HB, où il se divise en un courant Id et en un courant Ic. Le courant Id traverse le dispositif externe IDV qui extrait les données qu'il comporte et retourne au plan conducteur 2 par l'intermédiaire de l'environnement. Le courant Ic retourne au plan conducteur 2 en passant par d'autres parties du corps et l'environnement.

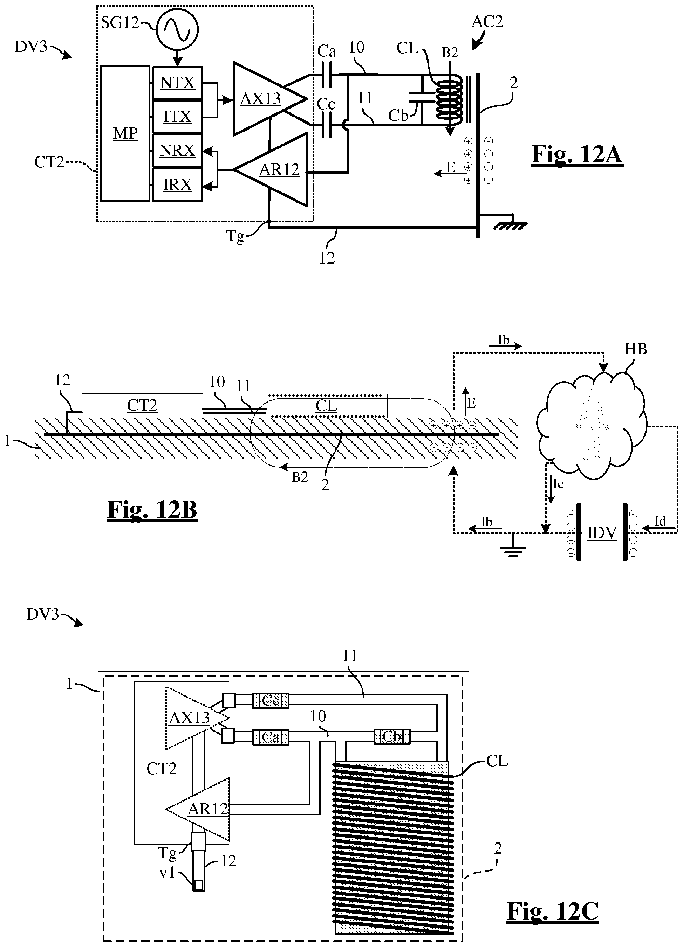

La figure 12A est le schéma électrique d'un autre mode de réalisation DV3 du dispositif DV de la figure 7. La figure 12B est une vue en coupe et la figure 12C une vue de dessus du dispositif DV3.

Le circuit DV3 comprend un circuit de contrôle CT2 et un circuit d'antenne AC2. Le circuit de contrôle CT2 diffère du circuit de contrôle CT, CT1 précédemment décrit en ce que l'amplificateur d'émission AX12 est remplacé par un amplificateur d'émission AX13 différentiel, à deux sorties. Le circuit d'antenne AC2 est un circuit d'antenne symétrique qui diffère du circuit d'antenne AC1 précédemment décrit en ce que la ligne conductrice 11 connectée à la première borne de la bobine d'antenne CL est reliée ici à la seconde sortie de l'amplificateur AX13 par l'intermédiaire d'un condensateur de découplage Cc. Le circuit d'antenne AC2 présente ainsi une fréquence d'accord qui est fonction de l'inductance de la bobine CL et des capacités des condensateurs Ca, Cb et Cc. Le plan conducteur 2 est ici le plan de masse du dispositif DV3, auquel est connectée la borne de masse Tg du circuit CT2 via la ligne conductrice 12.

Sur la figure 12B, le circuit de contrôle CT2 est une plaquette de semi-conducteur montée sur le circuit imprimé 1 dans lequel est enterré le plan conducteur 2. Sur la figure 12C, les lignes conductrices 10, 11, 12 sont des pistes du circuit imprimé, la piste 12 étant reliée au plan conducteur 2 par l'intermédiaire d'une traversée conductrice v1. Comme indiqué plus haut, le plan conducteur 1 pourrait aussi être réalisé à la surface du circuit imprimé 1.

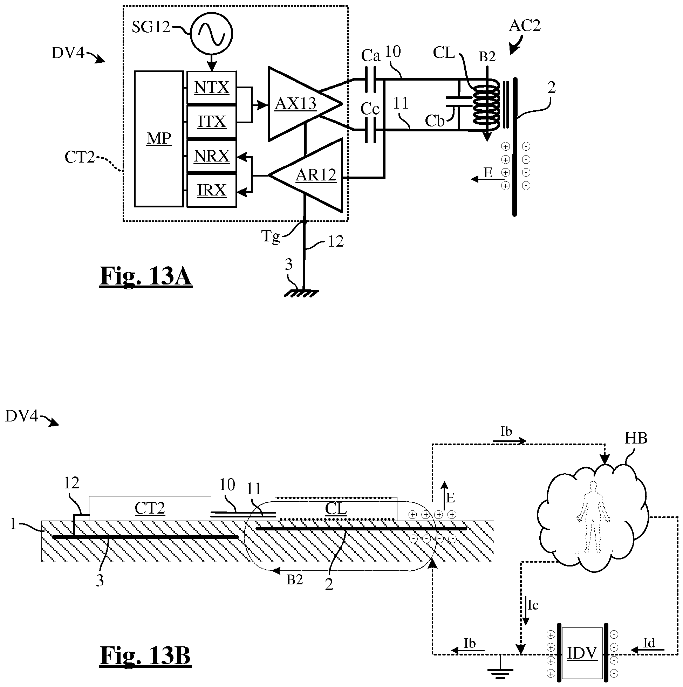

La figure 13A est le schéma électrique d'un mode de réalisation DV4 du dispositif DV de la figure 7, et la figure 13B est une vue en coupe du dispositif DV4. Le circuit DV4 comprend le circuit de contrôle CT2 et le circuit d'antenne symétrique AC2. Il diffère du dispositif DV3 en ce que le plan conducteur 2 est à un potentiel flottant. La borne de masse Tg du circuit de contrôle CT2 est reliée à une masse 3 distincte du plan conducteur 2, via la ligne conductrice 12. Sur la vue en coupe de la figure 13B, le circuit imprimé 1 comporte donc deux plans conducteurs, le plan conducteur 2 qui est à un potentiel flottant et un plan de masse 3 auquel la ligne conductrice 12 est connectée.

Les figures 12B et 13B montrent également un système d'échange de données IBAN comprenant le plan conducteur 2 formant la première électrode (supposé ici soumis au champ magnétique émis par la bobine d'antenne CL), le corps HB d'un utilisateur, et un dispositif IBAN externe IDV. Un courant Ib porteur de données DTx est émis par le plan conducteur 2, traverse le corps HB où il se divise en un courant Id et en un courant Ic. Le courant Id traverse le dispositif externe IDV et retourne au plan conducteur 2 par l'intermédiaire de l'environnement. Le courant Ic retourne au plan conducteur 2 en passant par d'autres parties du corps et l'environnement.

On a décrit dans ce qui précède un dispositif DV et des modes de réalisation DV1 à DV4 capables de transmettre des données IBAN avec une seule électrode. Bien que généralement deux électrodes soient requises dans un dispositif de transmission de données IBAN, afin d'appliquer entre les deux électrodes une différence de potentiel électrique, le procédé de génération du champ électrique via des courants induits qui vient d'être décrit permet de n'utiliser qu'une électrode. Cette électrode peut être partie d'un circuit imprimé sur lequel repose le dispositif et l'intégration du dispositif de transmission de données IBAN dans un téléphone mobile s'en trouve donc considérablement simplifiée. De plus, le couplage d'une bobine d'antenne NFC et du plan conducteur IBAN permet de commander l'électrode IBAN via la bobine d'antenne NFC, pour réaliser un dispositif compact IBAN-NFC à moindre coût, en utilisant certains éléments déjà présents dans un dispositif de transmission de données NFC, tel le processeur, le générateur de signal alternatif.

Il pourrait être souhaité de perfectionner ce dispositif de transmission de données IBAN-NFC en y ajoutant une seconde électrode. Dans certains modes de réalisation, une deuxième électrode pourrait être réalisée dans le circuit imprimé recevant la première électrode, par exemple sur la face arrière de celui-ci. Il peut toutefois être souhaité de prévoir une distance inter-électrode qui soit supérieure à l'épaisseur d'un circuit imprimé, pour diminuer la valeur de la capacité inter-électrode (capacité C6, Fig. 2). Plus la distance entre les deux électrodes IBAN est grande, plus la capacité inter-électrode est faible et plus son impédance est élevée. Le fait de distancier autant que possible les deux électrodes permet de diminuer le champ électrique E entre les électrodes et de l'intensifier à extérieur des électrodes, pour accroître ses effets sur l'environnement et notamment accroître l'intensité du courant intracorporel.

Un perfectionnement visé ici concerne donc la prévision à moindre coût d'une seconde électrode IBAN qui ne soit pas trop proche de la première électrode, dans le cadre d'une intégration du dispositif de transmission de données IBAN-NFC dans un téléphone mobile ou équivalent.

Des modes de réalisation de l'invention se fondent sur la constatation que les dispositifs portables électroniques de type téléphone mobile comportent généralement un afficheur numérique, par exemple un afficheur à cristaux liquides ou un afficheur organique utilisant des diodes électroluminescentes organiques (OLED), de type OLED ou AMOLED ("Matrice Active à Diodes Électroluminescentes Organiques"). Or, de tels afficheurs comportent généralement au moins un plan conducteur de grande surface. Un tel plan conducteur est souvent agencé sur la face arrière des afficheurs numériques et est souvent relié à la masse du circuit électronique de l'afficheur, pour neutraliser les rayonnements électromagnétiques parasites que celui-ci émet en raison de sa fréquence de commutation élevée.

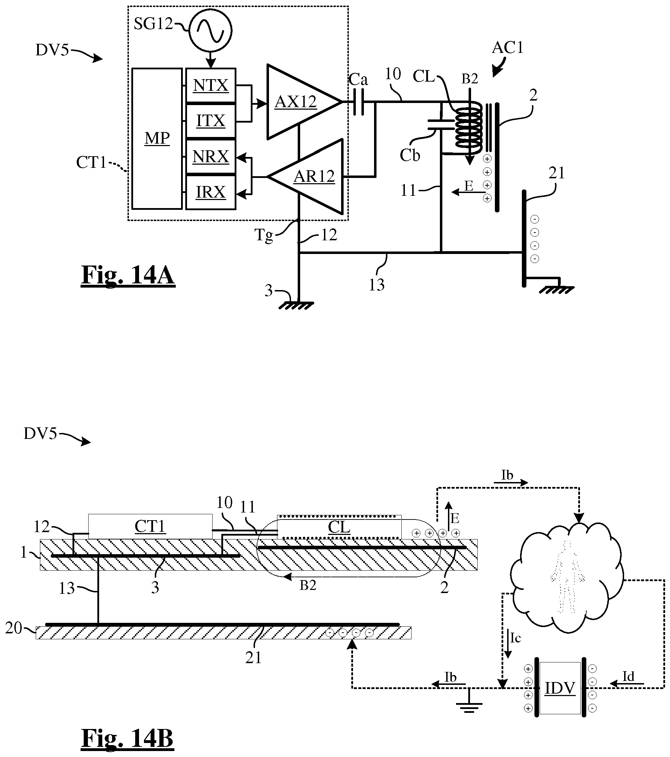

La figure 14A est le schéma électrique d'un dispositif de transmission de données IBAN-NFC DV5 selon l'invention, qui se distingue du dispositif DV2 de la figure 11A en ce qu'il comporte une seconde électrode IBAN formée par un plan conducteur 21 d'un afficheur numérique. Le plan conducteur 2 formant la première électrode est à un potentiel flottant tandis que le plan de masse 3 du circuit de contrôle CT1, auquel la borne de masse Tg du dispositif est connectée via la ligne conductrice 12, est connecté au plan conducteur 21 de l'afficheur 20 par l'intermédiaire d'un conducteur 13.

La figure 14B est une vue en coupe du dispositif DV5. Le plan conducteur 2 et le plan de masse 3 sont comme précédemment des couches conductrices d'un circuit imprimé 1, pouvant être enterrées (comme représenté) ou agencées à la surface du circuit imprimé. Le conducteur 13 qui relie le plan de masse 3 au plan conducteur 21 de l'afficheur est par exemple un fil électrique ou un barreau conducteur.

La figure 14B montre également un système d'échange de données IBAN comprenant le plan conducteur 2 formant la première électrode (supposé ici soumis au champ magnétique émis par la bobine d'antenne CL), le corps HB d'un utilisateur, un dispositif IBAN externe IDV, et le plan conducteur 21 formant la seconde électrode. Le symbole "+" symbolise la polarité du plan conducteur 2 et le symbole "-" symbolise la polarité du plan conducteur 21, pour une valeur instantanée du signal alternatif Si fourni par le générateur SG12. A l'instant représenté sur la figure 14B, le plan conducteur 2 est de polarité positive, sous l'effet des courants induits, et le plan conducteur 21 est polarisé négativement. Un courant Ib (de sens opposé au sens de circulation des électrons) est émis par le plan conducteur 2, traverse le corps HB, se divise en un courant Id et un courant Ic. Le courant Id traverse le dispositif externe et retourne au plan conducteur 21 par l'intermédiaire de l'environnement (représentée par le symbole de la terre). Le courant Ic rejoint le plan conducteur 21 en passant par d'autres parties du corps et l'environnement.

L'homme de l'art notera que les notions d'électrode interne (l'électrode couplée capacitivement au corps du sujet) et d'électrode externe (l'électrode couplée capacitivement à l'environnement) sont relatives, et dépendent de l'agencement du dispositif à deux électrodes relativement au corps. Le plan conducteur 2 peut former l'électrode interne ou externe, et le plan conducteur 21 peut former l'électrode externe ou interne.

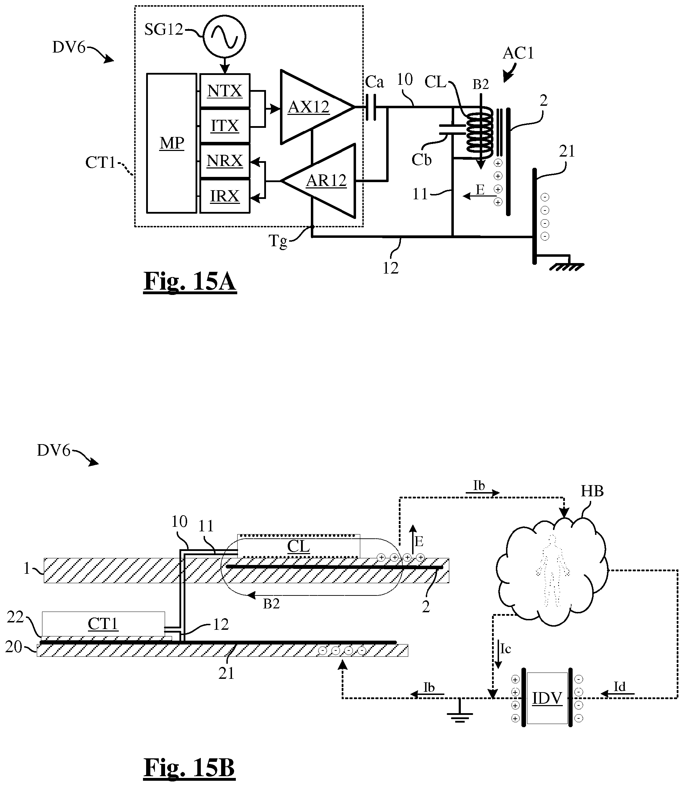

La figure 15A est le schéma électrique et la figure 15B une vue en coupe d'un dispositif de transmission de données IBAN-NFC DV6 selon l'invention, qui se distingue du dispositif DV5 en ce qu'il ne comporte pas le plan de masse 3. La borne de masse Tg du circuit de contrôle CT1 est directement connectée au plan conducteur 21 de l'afficheur 20 via la ligne conductrice 12. Par ailleurs, comme cela apparaît sur la figure 15B, le circuit de contrôle CT1 sous forme de circuit intégré sur puce de semi-conducteur, peut, dans ce mode de réalisation, être agencé sur la face arrière de l'afficheur 20, dans une zone de la face arrière recevant des composants électroniques ou sur le plan conducteur 21 et par l'intermédiaire d'une couche électriquement isolante 22.

La figure 15B montre également un système d'échange de données IBAN comprenant le plan conducteur 2 formant la première électrode (supposé ici soumis au champ magnétique émis par la bobine d'antenne CL), le corps HB d'un utilisateur, un dispositif IBAN externe IDV, et le plan conducteur 21 formant la seconde électrode. Le réseau ainsi formé est identique à celui décrit en relation avec la figure 14B.

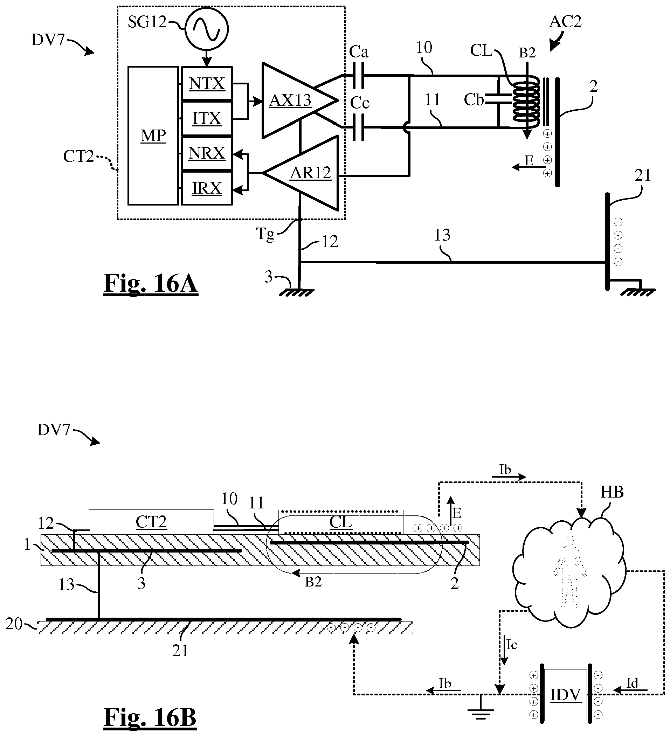

La figure 16A est le schéma électrique d'un dispositif de transmission de données IBAN-NFC DV7 selon l'invention, qui se distingue du dispositif DV4 de la figure 13A en ce qu'il comporte la seconde électrode formée par un plan conducteur 21 d'un afficheur numérique. Le plan conducteur 2 est comme précédemment à un potentiel flottant, tandis que le plan de masse 3 du circuit de contrôle CT1 est connecté au plan conducteur 21 via le conducteur 13. La borne de masse Tg du circuit de contrôle CT2 est connectée au plan de masse 3 via la ligne conductrice 12.

La figure 16B est une vue en coupe du dispositif DV7 qui montre le plan conducteur 2 et le plan de masse 3 en tant que couches conductrices d'un circuit imprimé 1, pouvant être enterrées (comme représenté) ou agencées à la surface du circuit imprimé. Le conducteur 13 peut comme précédemment être un fil électrique ou un barreau conducteur.

La figure 16B montre également un système d'échange de données IBAN comprenant le plan conducteur 2 formant la première électrode (supposé ici soumis au champ magnétique émis par la bobine d'antenne CL), le corps HB d'un utilisateur, un dispositif IBAN externe IDV, et le plan conducteur 21 formant la seconde électrode. Le réseau ainsi formé est identique à celui décrit en relation avec la figure 14B.

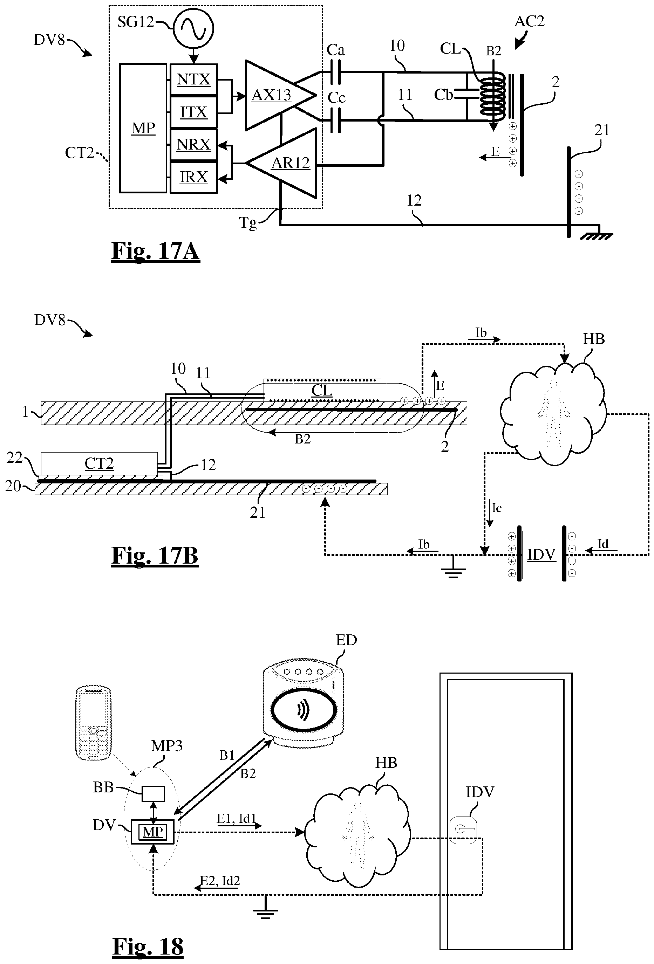

La figure 17A est le schéma électrique et la figure 17B une vue en coupe d'un dispositif de transmission de données IBAN-NFC DV8 selon l'invention, qui se distingue du dispositif DV7 en ce qu'il ne comporte pas le plan de masse 3. La borne de masse Tg du circuit de contrôle CT1 est directement connectée au plan conducteur 21 de l'afficheur 20 via la ligne conductrice 12. Par ailleurs, comme cela apparaît sur la figure 15B, le circuit de contrôle CT2 sous forme de circuit intégré sur puce de semi-conducteur, peut, dans ce mode de réalisation, être agencé directement sur la face arrière de l'afficheur 20, dans une zone recevant des composants ou sur le plan conducteur 21 par l'intermédiaire d'une couche électriquement isolante 22.

Il apparaîtra clairement à l'homme de l'art que la présente invention est susceptible de divers modes de réalisation et de diverses autres applications. Par exemple, bien que l'utilisation du plan conducteur d'un afficheur numérique comme seconde électrode IBAN ait été décrite en relation avec la réalisation d'un dispositif de transmission de données IBAN-NFC, cette caractéristique peut aussi être utilisée pour réaliser un dispositif de transmission de données IBAN dépourvu de la fonctionnalité NFC. Par ailleurs, la seconde électrode pourrait prendre une autre forme, par exemple consister en une feuille conductrice agencée dans le boîtier de l'appareil recevant le dispositif IBAN-NFC.

La figure 18 montre un dispositif DV (DV1 à DV8) selon l'invention intégré dans un téléphone mobile MP3 comprenant un processeur principal BB ou "processeur bande de base" de radiotéléphonie. Le processeur principal BB est relié au processeur MP du dispositif DV pour déclencher des applications NFC ou IBAN. Ces applications sont déclenchées à la demande de l'utilisateur ou sur détection d'un champ magnétique NFC ou d'un champ électrique IBAN, en alternant cycliquement un mode de fonctionnement NFC et un mode de fonctionnement IBAN. Au moyen du dispositif DV, le téléphone peut établir une communication avec un dispositif NFC distant ED, recevoir des données par l'intermédiaire d'un champ magnétique B1 émis par le dispositif distant ED, ou envoyer des données en émettant lui-même un champ magnétique B2. Le téléphone peut également établir une communication avec un dispositif de transmission de données IBAN distant IDV, émettre un champ électrique E1 et un courant intracorporel Id1 porteur de données ou recevoir un champ électrique E2 et un courant intracorporel Id2 porteur de données émis par le dispositif DV.

## Revendications

1. Dispositif électronique portable (MP3) comprenant :
- un afficheur numérique (20) comportant un plan électriquement conducteur (21) pour neutraliser des rayonnements électromagnétiques parasites de l'afficheur,
- un dispositif (DV5-DV8) de transmission de données par courant intracorporel, comprenant une première électrode destinée à être couplée capacitivement avec le corps (HB) d'un sujet et une seconde électrode destinée à être couplée capacitivement avec l'environnement, et
- un circuit imprimé (1) comprenant un plan conducteur (2),
**caractérisé en ce que** la première ou seconde électrode du dispositif de transmission de données est formée par le plan conducteur (21) de l'afficheur (20), qui est relié électriquement au dispositif de transmission de données, et **en ce que** la seconde ou première électrode est formée par le plan conducteur (2) du circuit imprimé.

2. Dispositif selon la revendication 1, dans lequel une borne de masse (Tg) du dispositif de transmission de données par courant intracorporel (DV5-DV8) est reliée (12) au plan conducteur (21) de l'afficheur.

3. Dispositif selon l'une des revendications 1 et 2, dans lequel le plan conducteur (2) du circuit imprimé est à un potentiel électrique flottant.

4. Dispositif selon l'un des revendications 1 à 3, comprenant une bobine électrique (CL) qui est agencée à proximité du plan conducteur (2) du circuit imprimé de manière à générer, à partir d'un signal alternatif (Si), un champ magnétique alternatif (B2) ayant des lignes de champ qui se heurtent au plan conducteur du circuit imprimé (2) et induisent dans celui-ci des courants (ECi) qui induisent à leur tour un champ électrique (E) générateur de courant intracorporel.

5. Dispositif selon la revendication 4, dans lequel la bobine (CL) comporte des enroulements coaxiaux autour d'un coeur magnétiquement conducteur, et présente un axe magnétique parallèle au plan conducteur (2).

6. Dispositif selon la revendication 5, dans lequel la bobine (CL) est montée sur une face du circuit imprimé et le plan conducteur (2) du circuit imprimé s'étend sur la face du circuit imprimé recevant la bobine.

7. Dispositif selon l'une des revendications 4 à 6, comprenant en outre un dispositif de transmission de données par couplage inductif (MP, SG12, NTX, NRX, AX12, AX13, AR12), et dans lequel la bobine électrique (CL) est la bobine d'antenne du dispositif de transmission de données par couplage inductif.

8. Dispositif selon la revendication 7, comprenant un processeur (MP) contrôlant le dispositif de transmission de données par couplage inductif et le dispositif de transmission de données par courant intracorporel, et présentant un premier mode de fonctionnement pour la transmission de données par courant intracorporel et un second mode de fonctionnement pour la transmission de données par couplage inductif.

9. Dispositif selon l'une des revendications 7 et 8, dans lequel le dispositif de transmission de données par couplage inductif et le dispositif de transmission de données par courant intracorporel comprennent un générateur de signal alternatif commun (SG12) fournissant un premier signal alternatif (Si) pour la transmission de données par courant intracorporel et un second signal alternatif (Sn) pour la transmission de données par couplage inductif.

10. Dispositif selon la revendication 9, dans lequel les deux signaux alternatifs sont de même fréquence.

11. Dispositif selon la revendication 10, dans lequel les deux signaux alternatifs oscillent à 13,56 MHz.

12. Dispositif selon l'une des revendications 7 à 11, dans lequel le dispositif de transmission de données par couplage inductif et le dispositif de transmission de données par courant intracorporel comprennent un amplificateur commun (AX12, AX13) pour amplifier un signal alternatif (Sn, Si) fourni par le générateur de signal alternatif commun (SG12) et l'appliquer à la bobine d'antenne.

13. Dispositif selon la revendication 12, dans lequel :
- le dispositif de transmission de données par couplage inductif comprend un circuit de transmission (NTX) configuré pour fournir à l'amplificateur commun un signal modulé porteur de données à transmettre (Sn(DTx)), et
- le dispositif de transmission de données par courant intracorporel comprend un circuit de transmission (ITX) configuré pour fournir à l'amplificateur commun un signal modulé porteur de données à transmettre (Si(DTx)).

14. Dispositif selon l'une des revendications 1 à 13, comprenant également un dispositif de radiotéléphonie.

## Patentansprüche

1. Tragbare elektronische Vorrichtung (MP3), welche umfasst:
- ein digitales Display (20), das eine elektrisch leitende Ebene (21) zum Neutralisieren der elektromagnetischen Störstrahlungen des Displays aufweist,
- eine Vorrichtung (DV5-DV8) zur Datenübertragung durch intrakorporalen Strom, welche eine erste Elektrode, die dazu bestimmt ist, mit dem Körper (HB) eines Subjekts kapazitiv gekoppelt zu werden, und eine zweite Elektrode, die dazu bestimmt ist, mit der Umgebung kapazitiv gekoppelt zu werden, umfasst, und
- eine Leiterplatte (1), die eine leitende Ebene (2) umfasst,
**dadurch gekennzeichnet, dass** die erste oder zweite Elektrode der Vorrichtung zur Datenübertragung von der leitenden Ebene (21) des Displays (20) gebildet wird, welche elektrisch mit der Vorrichtung zur Datenübertragung verbunden ist, und dadurch, dass die zweite oder erste Elektrode von der leitenden Ebene (2) der Leiterplatte gebildet wird.

2. Vorrichtung nach Anspruch 1, wobei ein Masseanschluss (Tg) der Vorrichtung zur Datenübertragung durch intrakorporalen Strom (DV5-DV8) mit der leitenden Ebene (21) des Displays verbunden (12) ist.

3. Vorrichtung nach einem der Ansprüche 1 und 2, wobei die leitende Ebene (2) der Leiterplatte ein elektrisches Schwebepotential aufweist.

4. Vorrichtung nach einem der Ansprüche 1 bis 3, welche eine elektrische Spule (CL) umfasst, die in der Nähe der leitenden Ebene (2) der Leiterplatte angeordnet ist, um aus einem Wechselsignal (Si) ein magnetisches Wechselfeld (B2) zu erzeugen, welches Feldlinien aufweist, die an die leitende Ebene der Leiterplatte (2) stoßen und Ströme (ECi) in dieser induzieren, welche ihrerseits ein elektrisches Feld (E) induzieren, das intrakorporalen Strom erzeugt.

5. Vorrichtung nach Anspruch 4, wobei die Spule (CL) koaxiale Wicklungen um einen magnetisch leitenden Kern umfasst und eine magnetische Achse aufweist, die zu der leitenden Ebene (2) parallel ist.

6. Vorrichtung nach Anspruch 5, wobei die Spule (CL) auf einer Seite der Leiterplatte angebracht ist und die leitende Ebene (2) der Leiterplatte sich auf der Seite der Leiterplatte erstreckt, welche die Spule aufnimmt.

7. Vorrichtung nach einem der Ansprüche 4 bis 6, welche außerdem eine Vorrichtung zur Datenübertragung durch induktive Kopplung (MP, SG12, NTX, NRX, AX12, AX13, AR12) umfasst, und wobei die elektrische Spule (CL) die Antennenspule der Vorrichtung zur Datenübertragung durch induktive Kopplung ist.

8. Vorrichtung nach Anspruch 7, welche einen Prozessor (MP) umfasst, der die Vorrichtung zur Datenübertragung durch induktive Kopplung und die Vorrichtung zur Datenübertragung durch intrakorporalen Strom steuert, und eine erste Betriebsart für die Datenübertragung durch intrakorporalen Strom und eine zweite Betriebsart für die Datenübertragung durch induktive Kopplung aufweist.

9. Vorrichtung nach einem der Ansprüche 7 und 8, wobei die Vorrichtung zur Datenübertragung durch induktive Kopplung und die Vorrichtung zur Datenübertragung durch intrakorporalen Strom einen gemeinsamen Wechselsignalgenerator (SG12) umfassen, der ein erstes Wechselsignal (Si) für die Datenübertragung durch intrakorporalen Strom und ein zweites Wechselsignal (Sn) für die Datenübertragung durch induktive Kopplung liefert.

10. Vorrichtung nach Anspruch 9, wobei die beiden Wechselsignale dieselbe Frequenz aufweisen.

11. Vorrichtung nach Anspruch 10, wobei die beiden Wechselsignale mit 13,56 MHz schwingen.

12. Vorrichtung nach einem der Ansprüche 7 bis 11, wobei die Vorrichtung zur Datenübertragung durch induktive Kopplung und die Vorrichtung zur Datenübertragung durch intrakorporalen Strom einen gemeinsamen Verstärker (AX12, AX13) umfassen, um ein von dem gemeinsamen Wechselsignalgenerator (SG12) geliefertes Wechselsignal (Sn, Si) zu verstärken und es an die Antennenspule anzulegen.

13. Vorrichtung nach Anspruch 12, wobei:
- die Vorrichtung zur Datenübertragung durch induktive Kopplung eine Übertragungsschaltung (NTX) umfasst, die dafür ausgelegt ist, an den gemeinsamen Verstärker ein moduliertes Signal zu liefern, das Träger von zu übertragenden Daten ist (Sn(DTx)), und
- die Vorrichtung zur Datenübertragung durch intrakorporalen Strom eine Übertragungsschaltung (ITX) umfasst, die dafür ausgelegt ist, an den gemeinsamen Verstärker ein moduliertes Signal zu liefern, das Träger von zu übertragenden Daten ist (Si(DTx)).

14. Vorrichtung nach einem der Ansprüche 1 bis 13, welche außerdem eine Funktelefonieeinrichtung umfasst.

## Claims

1. A portable electronic device (MP3) comprising:
- a digital display (20) comprising an electrically conducting plane (21) for neutralizing interfering electromagnetic radiation of the display,
- a device (DV5-DV8) for transmitting data by intracorporeal current, comprising a first electrode intended to be capacitively coupled with the body (HB) of a subject and a second electrode intended to be capacitively coupled with the environment, and
- a printed circuit (1) comprising a conducting plane (2),
**characterized in that** the first or second electrode of the data transmission device is formed by the conducting plane (21) of the display (20), which is electrically coupled to the data transmission device, and **in that** the second or first electrode is formed by the conducting plane (2) of the printed circuit.

2. The device according to claim 1, wherein a ground terminal (Tg) of the device for transmitting data by intracorporeal current (DV5-DV8) is coupled (12) to the conducting plane (21) of the display.

3. The device according to one of claims 1 and 2, wherein the conducting plane (2) of the printed circuit is at a floating electric potential.

4. The device according to one of claims 1 to 3, comprising an electric coil (CL) which is arranged near the conducting plane (2) of the printed circuit so as to generate, from an AC signal (Si), an alternating magnetic field (B2) having field lines incident on the conducting plane of the printed circuit (2) and which therein induce currents (ECi) which, in turn, induce an electric field (E) generating intracorporeal current.

5. The device according to claim 4, wherein the coil (CL) comprises coaxial windings around a magnetically conducting core, and has a magnetic axis parallel to the conducting plane (2).

6. The device according to claim 5, wherein the coil (CL) is mounted on a face of the printed circuit and the conducting plane (2) of the printed circuit extends over the face of the printed circuit receiving the coil.

7. The device according to one of claims 4 to 6, further comprising a device for transmitting data by inductive coupling (MP, SG12, NTX, NRX, AX12, AX13, AR12), and wherein the electric coil (CL) is the antenna coil of the device for transmitting data by inductive coupling.

8. The device according to claim 7, comprising a processor (MP) controlling the device for transmitting data by inductive coupling and the device for transmitting data by intracorporeal current, and having a first operating mode for the data transmission by intracorporeal current and a second operating mode for the data transmission by inductive coupling.

9. The device according to one of claims 7 and 8, wherein the device for transmitting data by inductive coupling and the device for transmitting data by intracorporeal current comprise a common AC signal generator (SG12) providing a first AC signal (Si) for the data transmission by intracorporeal current and a second AC signal (Sn) for the data transmission by inductive coupling.

10. The device according to claim 9, wherein the two AC signals are of the same frequency.

11. The device according to claim 10, wherein the two AC signals oscillate at 13.56MHz.

12. The device according to one of claims 7 to 11, wherein the device for transmitting data by inductive coupling and the device for transmitting data by intracorporeal current comprise a common amplifier (AX12, AX13) for amplifying an AC signal (Sn, Si) supplied by the common AC signal generator (SG12) and applying it to the antenna coil.

13. The device according to claim 12, wherein:
- the device for transmitting data by inductive coupling comprises a transmitter circuit (NTX) configured to supply the common amplifier with a modulated signal carrying data to be transmitted (Sn(DTx)), and
- the device for transmitting data by intracorporeal current comprises a transmitter circuit (ITX) configured to supply the common amplifier with a modulated signal carrying data to be transmitted (Si(DTx)).

14. The device according to one of claims 1 to 13, also comprising a radiotelephony device.
